# EUROPEAN PATENT APPLICATION

(11) **EP 1 832 341 A1**
(43) Date of publication of application: **12.09.2007**
(21) Application number: 06004992.1
(22) Date of filing: 10.03.2006
(51) Int. Cl.: B01J 20/26, B01J 39/18, B01J 41/12, C02F 1/42, C02F 1/28

(54) **Highly efficient desalination and ion exchange using a thermoreversible polymer**

(71) Applicant: MPG Max-Planck-Gesellschaft zur Förderung der Wissenschaften e.V., 80539 München (DE)
(72) Inventor: Antonietti, Markus, Prof. Dr., 14558 Nuthetal, OT Bergholz-Rehbrücke (DE)
(74) Representative: Katzameyer, Michael

(57) **Abstract**

The invention relates to the use of a thermoreversible polymer which is able to undergo thermoinduced changes in hydration for simultaneous binding of anions and cations from an aqueous solution. More specifically, the present invention provides means for highly efficient desalination and ion exchange by use of a thermoreversible polymer, particularly a thermoreversible polymer gel.

## Description

### Background

Desalination of water or, more generally, the partial or complete removal of anions and cations from aqueous solutions, in a large scale is usually performed by distillation or with desalination membranes. For smaller quantities, e.g. in a laboratory scale, also consecutive application of cationic and anionic exchange resins is commonly used. All of these techniques of the prior art, however, are fraught with different problems and rather laborious and/or expensive.

In particular, the binding capacity of ion exchange resins in the prior art is rather low. For example, the commercially available anion exchange resin Amberlite IRA-400 (Rohm and Haas) is only capable to bind 1.4 eq./l anions (e.g. corresponding to about 50 g chloride ions). Cation exchange resins, such as Amberlite IRP-69, are capable to bind about 4,3 eq./l (e.g. corresponding to about 100 g Na⁺). With the ion exchange resins of the prior art, about 17 kg ion exchange material are required to bind 1 kg NaCl. Evidently, this is not very efficient. Also, if these ion exchange resins are to be regenerated, large amounts of strong bases and acids are necessary which is unfavourable from an environmental point of view. Consequently, many ion exchange devices are adjusted to be "weak" i.e. predominant or exclusive binding of multivalent ions but not of NaCl.

Thus, in view of the world's permanently growing needs of fresh clean water, improved and economical methods for ion exchange and desalination would be very desirable.

Therefore, the object of the present invention is to provide new and effective means for removing anions and cations from aqueous solutions.

Said problem is solved according to the present invention by the use of a thermoreversible polymer which is able to undergo thermoinduced changes in hydration for the very effective simultaneous binding of anions and cations from an aqueous solution.

Related, but different aspects of the present invention are the use of said thermoreversible polymers in various applications and embodiments (claims 1-15), methods of using said polymers for removing ions from aqueous solutions (claims 16-25) and a desalination or ion exchange device comprising such a polymer (claim 26).

### Description of the Invention

The present invention is based on the surprising finding that such polymers, particularly in the form of hydrated gels, are able to bind very large amounts of salts by a previously unknown mechanism for ion binding. According to this new mechanism, the binding of ions to such polymer gels essentially is not based on Coulomb forces but rather driven by the gain of entropy resulting from the displacement of water molecules from the hydration shell of the polymer which accompanies said ion binding and finally leads to dehydration and collapse of the gel structure.

Gelforming thermoreversible polymers which are able to undergo changes in hydration by changing temperature are known as such for more than forty years. For a review, see e.g., Schild, H.G., Prog. Polym. Sci. 17 (2), 163-249 (1992). It has been observed that a relatively small change of temperature can cause gels of such thermoreversible polymers to abruptly swell to many times their original size or to collapse into a compact mass. Further, it has been noted that the temperature of gel collapse or expansion depends on the salinity of the aqueous solution. Also, this shift is sensitive to the type of salt and follows for the involved anions the Hofmeister series (Schild et al., J. Phys. Chem. 94 (10), 4352-4356 (1990)).

Surprisingly, however, it appears that no one ever investigated if the interaction of polymer with water and water with salt might also lead to a mutual attraction of polymer and salt. In accordance with the established general rules of spontaneous equilibration of osmotic pressure and ion potentials, it was always assumed that the ion concentration within the gel and outside the gel is the same.

In contrast to this view and based on preliminary experiments with thermoreversible polymer gels demonstrating that water can be very readily removed from those structures, the present inventor postulated entropy driven interactions and rearrangements of the polymer enabling the simultaneous binding of large amounts of salt and gel dehydration and collapse. This hypothesis has convincingly proven by the experimental evidence presented herein.

In accordance with this mechanism, it was evidenced that ion binding to such polymers does not rely on the presence of charged groups on the polymer, but could take place to large extents even onto neutral polymers with weakly bound hydration shells or water molecules.

Gels of such polymers which are near their lower critical solution temperature (LCST) can be used as "ion sponges". Both the anion and cation bind to the polymer gel ("ion pair binding"), driven by dehydration entropy. As mentioned above, said gel may be charged or uncharged and for some applications an uncharged gel may be even preferable. Since the ion pair binding according to the present invention is not based on interactions with charged groups on the polymer, the binding capacity is only limited by the dehydration capacity of the gel and not by the stoichiometric ratio of gel and salt. Contrary to the behavior of classical ion exchange resins, very large amounts of salt which are well beyond the molar stoichometry thus can be bound. As the salt subsequently can be released conveniently by changing temperature, this new mode of salt binding is suited to base a new simple cyclic desalination process.

The thermoreversible polymer for use in the present invention may be any polymer capable of forming a hydration shell in an aqueous solution and capable to undergo significant changes in hydration in response to a change of temperature of said solution. More specifically, the polymer may be selected from the thermoreversible polymers disclosed by Schild, H.G., (1992) above, and in particular selected from the group of substituted polyacrylamides, polyacrylates, polyvinylamides, polyalkyloxazolines, polyvinylimidazoles, and their copolymers and blends.

Specific examples for such polymers are poly(N-isopropylacrylamide) (PNIPAAM), poly(N-vinylcaprolactam), poly(N-isopropyloxazoline), poly(vinylimidazole) und poly(N-acryloyl-pyrrolidin). Beside those homopolymers and copolymers thereof, the appropriate hydrophilic-hydrophobic balance - which results in said favourable thermoreversible behaviour near a lower critical solution temperature (LCST) - may also be established by copolymerization of more hydrophilic and hydrophobic derivatives, summing up to a similar average constitution of the chain.

In one specific embodiment, the thermoreversible polymer is poly(N-isopropylacrylamide) (PNIPAAM) or a copolymer or derivative thereof.

The thermoreversible polymer gel may also be a gel made of biological substances, e.g. proteins/peptides, such as an elastin gel. Also for proteins/peptides, the appropriate hydrophilic/hydrophobic balance to ensure LCST behaviour can be established by a appropriate cocondensation of hydrophilic and hydrophobic amino acids, however with a very larger number of ways realizing the appropriate solubility behaviour which will be evident for the skilled artisan.

Principally, the anions and cations to be removed from an aqueous solution may be any inorganic or organic ions which are able to bind to the thermoreversible polymer used.

Typically, the anions and cations will be selected from monovalent, divalent or trivalent inorganic or organic anions or cations.

For example, the inorganic cations may be selected from Li⁺, Na⁺, K⁺, Rb⁺, CS⁺, Cu⁺, Hg⁺, Pb⁺, Mg⁺⁺, Ca⁺⁺, Sr⁺⁺, Ba⁺⁺, Cd⁺⁺, Cu⁺⁺, Ni⁺⁺, Cr⁺⁺, Cr⁺⁺⁺, Hg⁺⁺, cations of Ag, Au, Pt, Pd or other precious metals or other cations of major or minor group elements of the periodic table of elements.

The inorganic anions may be selected from, e.g., F⁻, Cl⁻, Br⁻, I⁻, SO₄⁻⁻, PO₄⁻⁻⁻,CrO₄⁻⁻, HCO₃⁻, CO₃⁻⁻.

Some specific, but not limiting examples of organic ions are tetraalkylammmonium, alkyl phosphates and phosphonates, alkyl sulfates and sulfonates, and ionic dye molecules.

Specifically, the ions may comprise any of the ions present in sea water or industrial waste water.

In a preferred embodiment of the present invention the ions comprise monovalent anions or cations. Due to the high binding capacity of the above thermoreversible polymers for monovalent ions, in contrast to classical ion exchange resins, this embodiment is particularly advantageous.

Similar to classical exchange resins, the polymer is preferentially used in the form of a structured polymer gel, such as macroporous, macroreticular membranes or polymer beads to comply the demands of binding capacity and binding kinetics, but also microgels might be applied for binding in a dispersed, continuous phase. Another advantageous preparation for chromatography and reversible binding are rigid, macroporous support beads (such as silica), on the surface of which a layer of the active polymer was grafted.

In a preferred embodiment, such separation systems show a hierarchical porosity, where the size of the binding pores is between 2 and 25 nm, whereas transport pores and channels for rapid water transport usually have a size between 50 nm and 5 micron.

According to the present invention, the polymer binds the ions generally at a temperature below its the lower critical solution temperature (LCST), which is the temperature where the polymer gel starts to collapse in the aqueous solution, preferably at a temperature slightly below LCST. Preferentially, the binding occurs at a temperature which is about 3-20°C or 3-15°C, preferably 3-10°C, below the lower critical solution temperature (LCST) of the polymer. For example, the binding to PNIPAAM may be performed at a temperature of about 25°C, which is about 7°C below the temperature where a PNIPAAM microgel collapses in pure water (32.5°C).

Exhausted, salt-loaded gel particles tend to spontaneously separating from the liquid phase of the aqueous solution and can be easily removed from the aqueous solution by, e.g., centrifugation.

As already mentioned above, the thermoreversible polymer gels used in the present invention can be regenerated easily and effective by redisperging the salt-loaded gel in a salt-free or low-salt solution and heating to a temperature well above the lower critical solution temperature of the gel in this solution. The temperature increase induces precipitation of the polymer gel and the concomitant release of the bound salt.

The present invention has a broad range of industrial applications. For example, said thermoreversible polymer gels can be used in large scale for desalination of sea water, brackish water or industrial waste water. Also, they may be used as improved ion exchange materials which have a very high ion binding capacity, in particular for monovalent ions, and favourable regeneration properties.

### Brief Description of the Figures

**Fig. 1:** Binding Isotherms. A) Results of the ISE: Molar ratio of bound K⁺ over monomer NIPAAM as a function of the molar ratio of added K⁺ over the monomer. The line indicated with "Slope 1" represents the case of 100% binding; B) Molar binding enthalpies of 0.08 N NaPAA3 and 0.044 N PNIPAAM titrated with 0.1 N KCl, as determined by the ITC.
**Fig. 2**: Hydrodynamic radius of the microgels as a function of concentration of added KC1 and NaCl to a solution of 0.5 wt% PNIPAAM. Error bars indicate reproducibility of three consecutive measurements.

### EXAMPLE 1

In this experiment, the binding of KCl (Sigma-Aldrich; Germany) to microgels made of a standard temperature sensitive polymer, poly(N-isopropylacrylamide) or PNIPAAM, was analyzed. The PNIPAAM microgels were made by crosslinking emulsion polymerization of NIPAAM monomer in presence of methylene bisacrylamide (MBA, Sigma-Aldrich) as a crosslinker, potassium peroxodisulfate (KPS, Fluka Chemicals) as an initiator and sodium dodecylsulfate (SDS, Fluka Chemicals) as a surfactant. The obtained PNIPAAM particles were purified by precipitation in acetone.

All solutions were prepared using deionized water from an Elix Milli-Q Millipore system with a TOC of less than 15 ppb and a resistivity of 18MS2cm.

Typically, a 0.1 molar solution of KC1 was added to a 0.5 wt% microgel solution and the excess of bound KC1 was determined by a potassium selective electrode and isothermal titration calorimetry (ITC). The experiments were performed at 25°C, slightly below the temperature where the microgel collapses in pure water (32.5°C).

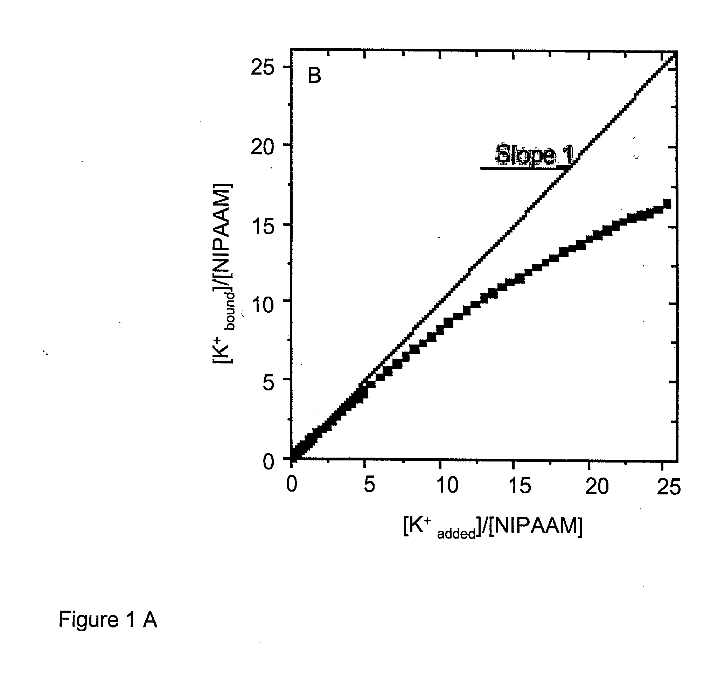

The amount of bound potassium was determined with a calibration curve that was identical before and after the measurement. Thus, the polymer gel does not interact with the ion selective membrane. A typical result is shown in Fig. 1A, where the amount of bound KCl is plotted against the amount of added KCl. The line indicated with "Slope 1" represents the case of 100 % binding of the added K⁺.

The PNIPAAM particles adsorb at lower salt concentrations practically all the salt added, i.e., they desalinate the solution very efficiently. Binding continues up to very high salt concentrations until finally binding capacity is exhausted. This limiting ion binding capacity is not defined by stoichiometry but rather by the structural collapse of the microgels as the particles start to phase separate from water at this salt concentration. Very surprising was the quantity of ion binding: PNIPAAM binds 0,5 mol potassium salt per mol monomer repeat unit rather strongly and additionally 1 mol salt more weakly. This is well beyond the capacity of classical ion exchange resins (with a factor of about 10-20).

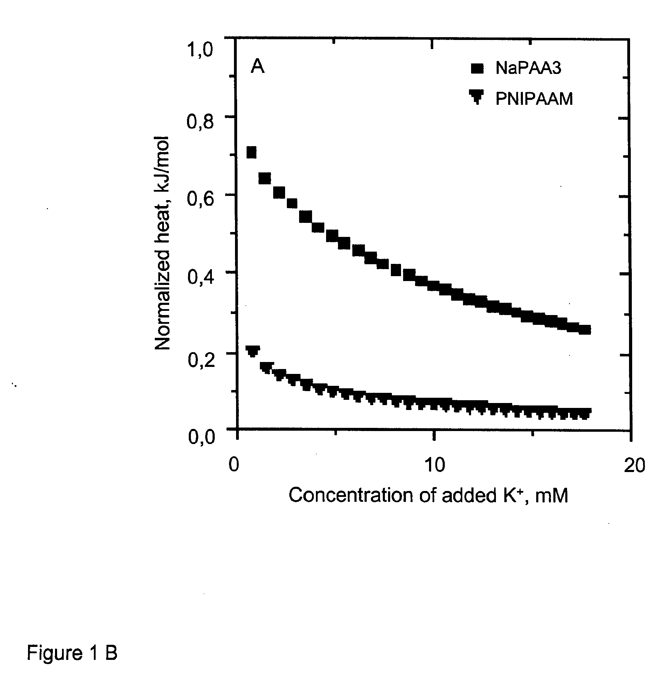

To characterize this binding further, the molar binding enthalpy of small aliquots of 0.1 N KC1 added into the 0.5 wt% microgel solution (pH 7) has been measured by ITC (Fig. 1B). Fig. 1B shows molar binding enthalpies of 0.08 N NaPAA3 and 0.044 N PNIPAAM titrated with 0.1 N KCl, as determined by the ITC. The heat (enthalpy) associated with the interaction (binding) of KC1 with the polymer gel was determined from the heat of injecting KCl into the polymer minus the dilution enthalpy of KCl minus the heat of dilution of the polymer. This heat was then normalized by the moles of added K⁺.

This binding enthalpy is endothermic, which means that the salt is indeed not fixed by classical valences to the gel. A comparison with the charged polyacrylic acid (PAA), a classical ion binder (not thermoreversibel), demonstrated that this endothermic character is stronger for the charged polymer (data not shown). As binding of the ions to the gel occurs deliberately, the driving force of the reaction must be a gain of entropy, which is believed to be primarily due to the liberation of water molecules from the gel and the ions, leading also to the macroscopically observed salting out of the polymer gel.

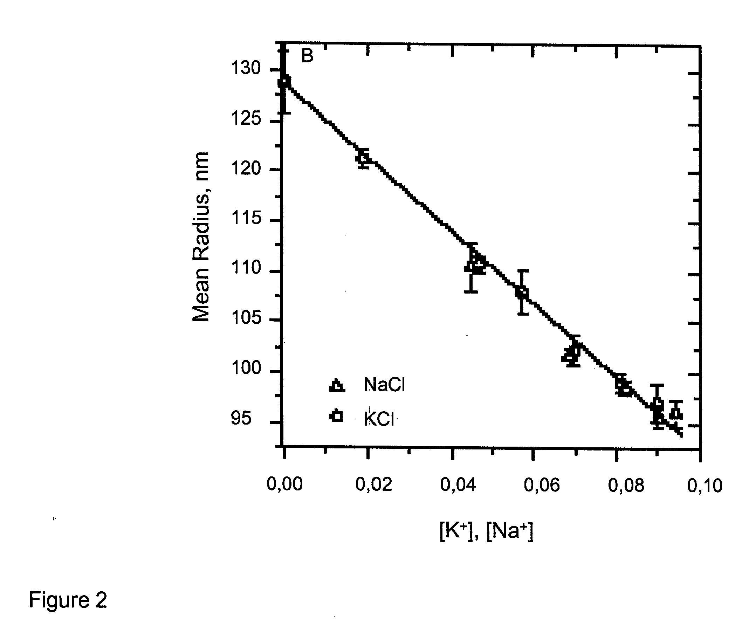

This could be verified using dynamic light scattering (DLS) to determine the microgel size upon addition of two salts, KCl and NaCl. The weight averaged radius of the microgel particles as a function of added concentration of NaCl and KCl for the titration of 0.044 N PNIPAAM is shown in Figure 2.

For both salts, a linear decrease of the particle size similar for both ion pairs was observed. From the known molecular volumes and weight, this experiment crudely translates into the simplified point that each microgel binds about 17 x 10⁶ ion pairs, but simultaneously liberates about 140 x 10⁶ water molecules, or the binding exchange occurs at a molecular ratio of about 4 for 1. According to simple thermodynamics, this is sufficient to support the observed reversible soft entropic binding.

### EXAMPLE 2

In order to demonstrate that such microgels are also able to desalinate sea water, 5 ml of a 3.5 wt% KCl solution (0.47 mol/L; "model sea water") were added to 5 ml of a 1.7 wt% microgel solution at 25°C. Subsequently the salt-loaded microgel was centrifuged down to form a separate bottom gel layer phase. The potassium concentration in the supernatant layer was determined to be 0.011 mol/L, which means that the gel has indeed taken up 97.7 % of the salt as ion pairs within the gel phase; this is twice its own weight. To our knowledge, this is the most efficient chemical desalination process currently known.

### EXAMPLE 3

A dispersion of 20 g PNIPAAM microgels (d = 200 - 250 nm, cross-linked 1/200) is stirred at 25°C (room temperature). A solution of calcium acetate (20 g/L) is slowly added up to mass equivalence of CaAc₂ and PNIPAAM (i.e. 10 ml to 10 ml).

After sedimentation, the overlayer medium is tested for Ca²⁺ by the oxalate precipitation method. More then 90 % of the calcium is bound by the microgels.

### EXAMPLE 4

A thin layer of poly(N-isopropyloxazoline) was grafted onto a mesoporous silica gel particle with a diameter of 10 - 15 microns. This was done by terminating the living cationic polymerization of N-isopropyloxazoline via the NH₂ groups of the amine terminated silica beads.

The polymer surface layer thickness was found to be 20 nm, the specific surface area was 60 m²/g. To 1 g of such chromatographic exchange beads, 0,1 g of different organic sodium salts were given (Na-acetate, Na-lactate, Na-gluconic acid). After filtering off the beads, the Na⁺ concentration of the residual solution was measured by AAS. In all cases, more than 90 % of the Na⁺ was bound.

### EXAMPLE 5

A macroreticular gel made by the demixing technique from N-isopropyl methacrylamide, N-methyl bisacrylamide (1 wt%) and poly(vinylpyrrolidone) in water was prepared on a polypropylene fleece as a reactive membrane. The membrane had a structural porosity of 2 - 10 microns, which ensured rapid water permeation.

A 2.0 g piece of this membrane was contacted with 100 ml of model sea water (3.5 wt% NaCl in distilled water) for 10 min under stirring. The membrane was mechanically removed, and the remaining water was evaporated to weight residual salt. Less than 10 % salt (0.35 g) is found in the membrane purified water.

### EXAMPLE 6

Poly(N-vinylcaprolactam) was made by precipitation polymerization from water, using ethylene glycol bisacrylate as a cross-linking agent (0.5 wt%). The resulting 1 - 3 micron-sized beads were swollen at 20°C in water (1g/100 ml) and contacted with a natrium carbonate/hydrogencarbonate buffer at pH 8. Up to weight equivalence of polymer beads and buffer salts, the buffer could practically completely be removed, and proven by a subsequent pH titration on the aqueous medium freed from the gel particles.

### EXAMPLE 7

The polymer gels used in the present invention can be regenerated by simple and effective means.

Thus, for example, the isolated bottom layer (the salt loaded gel) of the experiment of EXAMPLE 2 was redispersed in another 5 ml of solution (preferably at a temperature well below the LCST, e.g. about 5°C) and the whole system was brought to 40°C to precipitate the polymer from this dispersion. Removal of the polymer at this temperature and determining the K⁺ concentration in the liquid medium demonstrated that more than 50 % of the salt were released again. In the course of further heating, e.g. up to a temperature of about 60°C, most of the remaining salt was expelled from the gel.

### EXAMPLE 8

*Isothermal titration calorimetry* was performed with a VP-ITC microcalorimeter from MicroCal (Northhampton, MA). Two identical spherical cells, a reference cell and a sample cell, both with a volume of 1.442 mL, are enclosed in an adiabatic jacket. The titrant is injected stepwise into the working cell with a syringe having a total volume of 288 µL. The sample cell is constantly stirred. For the experiments reported here the stirring rate is 310 rpm. The measurement is performed at constant temperature, in this work 25°C. Small aliquots of titrant (typically 10 µL) are successively injected into the solution of the working cell. Each injection produces a characteristic peak in the heat flow (J/s) due to released or absorbed heat. Integrating each of the peaks provides the heat per injection. The data analysis was performed using the original software provided by MicroCal.

*A potassium ion selective electrode* (Mettler Toledo, Switzerland) was used to measure binding isotherms at different temperatures. The electrode measures the potential difference between a solution and a reference electrode which is proportional to the logarithm of the K⁺ concentration in the solution. The precision of the instrument is better than ± 2 % of the measure of K⁺ concentration. The calibration of the electrode was carried out with KCl solutions with concentrations in the range 10⁻⁵ - 5 x 10⁻³ M.

*Ultracentrifugation* was used to study the amount of potassium bound on PNIPAAM versus temperature with a preparative ultracentrifuge (Beckman-Coulter, L-70, 90 Ti fixed angle rotor). For the 4°C samples, the centrifugation lasted 66 hours with a speed of 60 000 rpm, whereas, for the 25°C samples, it lasts 24 hours at the same speed. The amount of free potassium in the supernatant was quantified by using a potassium ion selective electrode.

After addition of milli-Q water on the centrifugation pellet, the samples were let at 45°C during 24 hours. After a centrifugation at 45 000 rpm, during 20 minutes, the supernatant was used to determine the released potassium.

## Claims

1. Use of a thermoreversible polymer which is able to undergo thermoinduced changes in hydration for simultaneous binding of anions and cations from an aqueous solution.

2. The use according to claim 1, wherein the binding of said ions is reversible.

3. The use according to claim 1 or 2, wherein the binding occurs at a temperature which is in the range from 3-20°C, preferably 3-10°C, below the lower critical solution temperature (LCST) of the polymer.

4. The use according to any one of claims 1-3, wherein the thermoreversible polymer is present in the aqueous solution as a polymer gel, e.g. gel-forming microparticles or a macroscopic bulk gel.

5. The use according to any one of claims 1-4, wherein the polymer comprises an uncharged polymer.

6. The use according to any one of claims 1-5, wherein the polymer is selected from the group comprising substituted polyacrylamides, polyacrylates, polyvinylamides, polyalkyloxazolines, polyvinylimidazoles, and their copolymers and blends, and proteins/peptides, such as elastin.

7. The use according to claim 6, wherein the polymer is selected from poly (N-isopropylacrylamide) (PNIPAAM), poly(N-vinylcaprolactam), poly(N-isopropyloxazoline), poly(vinylimidazole) und poly(N-acryloyl-pyrrolidin) and derivatives, copolymers and blends thereof.

8. The use according to any one of claims 1-7, wherein the cations are selected from monovalent, divalent or trivalent inorganic or organic cations.

9. The use according to claim 8, wherein the cations are monovalent cations.

10. The use according to claim 8 or 9, wherein the cations are selected from Li⁺, Na⁺, K⁺, Rb⁺, Cs⁺, Cu⁺, Hg⁺, Pb⁺, Mg⁺⁺, Ca⁺⁺, Sr⁺⁺, Ba⁺⁺, Cd⁺⁺, Cu⁺⁺, Ni⁺⁺, Cr⁺⁺, Cr⁺⁺⁺, Hg⁺⁺ or cations of Ag, Au, Pt, Pd or other precious metals.

11. The use according to anyone of claims 1-11, wherein the anions are selected from F⁻, Cl⁻, Br⁻, I⁻, SO₄⁻⁻, PO₄⁻⁻⁻, CrO₄⁻⁻, HCO₃⁻, CO₃⁻⁻.

12. The use according to any one of claims 1-7, wherein the anions or cations comprise organic ions selected from tetraalkylammmonium, alkyl phosphates and phosphonates, alkyl sulfates and sulfonates, and ionic dye molecules.

13. The use according to any one of claims 1-12 in a method for desalination of aqueous solutions.

14. The use according to claim 13 in a method for desalination of sea water, brackish water or industrial waste water.

15. The use according to any one of claims 1-12, wherein the polymer is used as an ion-exchange material.

16. A method for simultaneous removing anions and cations from an aqueous solution comprising
a) contacting a thermoreversible polymer, which is able to undergo thermoinduced changes in hydration, at a temperature below the lower critical solution temperature for said polymer in said aqueous solution with the anions and cations; and
b) allowing the binding of said ions to the polymer.

17. The method according to claim 16, wherein the polymer is a polymer gel.

18. The method according to claim 16 or 17, comprising contacting said polymer with said ions at a temperature in the range from 3-20 °C, preferably 3-10°C, below the lower critical solution temperature for said polymer in said aqueous solution.

19. The method according to any one of claims 16-18, wherein the polymer is capable to bind at least 0.5 mol, preferable at least 1-1.5 mol, ions/mol monomer repeat unit of the polymer.

20. The method according to any one of claims 16-19, further comprising
c) removing exhausted polymer particles from the aqueous solution.

21. The method according to claim 21, wherein said removing of exhausted polymer particles involves a centrifugation step.

22. The method according to any one of claims 20-21, further comprising
d) regenerating the exhausted polymer particles by redispersing said particles in an aqueous solution and heating the solution at a temperature above the lower critical solution temperature of the polymer which is suitable to cause precipitation of the polymer and to release most of the ions from the polymer.

23. The method according to any one of claims 16-22 which is a method for desalination of an aqueous solution.

24. The method according to claim 23 which is a method for desalination of sea water, brackish water or industrial waste water.

25. The method according to any one of claims 16-22 which is an ion exchange method.

26. A desalination or ion exchange device comprising a thermoreversible polymer which is able to undergo thermoinduced changes in hydration and which is able to simultaneously bind anions and cations from an aqueous solution at a temperature which is below the lower critical solution temperature of the polymer.
